# EUROPEAN PATENT APPLICATION

(11) **EP 3 220 237 A1**
(43) Date of publication of application: **20.09.2017**
(21) Application number: 17161651.9
(22) Date of filing: 17.03.2017
(51) Int. Cl.: G06F 3/01, B60K 35/00, G02B 27/01

(54) **VEHICLE DISPLAY DEVICE**

(30) Priority: 18.03.2016 JP 2016056136
(71) Applicant: Toyota Jidosha Kabushiki Kaisha, Toyota-shi, Aichi-ken, 471-8571 (JP)
(72) Inventor: MURAI, Rie, Aichi-ken, Aichi 471-8571 (JP)
(74) Representative: D Young & Co LLP

(57) **Abstract**

A vehicle display device includes: a display object detection unit (113); a display processing unit (140); and a region calculation unit (111). The display object detection unit (113) detects an object. The display processing unit (140) displays a first virtual image in a first display mode and a second virtual image in a second display mode. The second display mode has a higher recognition possibility of a driver for presence of the object than the first display mode. The region calculation unit (111) calculates a first region and a second region. In the first region, it is easier for the driver to acquire information than in the second region. The display processing unit (140) displays the second virtual image in the second region, and the first virtual image in the first region according to a position of the object.

## Description

### BACKGROUND OF THE INVENTION

### 1. Field of the Invention

The invention relates to a vehicle display device.

### 2. Description of Related Art

There is known a vehicle display device that projects onto a projection member a virtual image corresponding to an object that is present in front of a vehicle. This type of display device makes it easier to recognize the object, for example, by superimposing the virtual image on a real image of the object.

Japanese Patent Application Publication No. 2015-160445 (JP 2015-160445 A) describes one example of a technique that displays a virtual image in a manner to make it easier for a driver to recognize an object by taking it into account that the effective visual field of the driver is narrowed as the vehicle speed increases. A vehicle display device described in JP 2015-160445 A is a so-called head-up display (HUD). This HUD includes a vehicle speed sensor that detects the vehicle speed, and a control unit that moves the display position of a virtual image (display image) to the center side of the effective visual field of the driver as the vehicle speed detected by the vehicle sensor gets higher.

According to the vehicle display device described in JP 2015-160445 A, even when the range of the effective visual field of the driver is changed according to the vehicle speed, it is possible to enhance the possibility of recognition of this virtual image, by displaying an HUD virtual image (display image) in the effective visual field of the driver.

### SUMMARY OF THE INVENTION

In recent years, the amount of information that is provided to a driver by a display device has increased such that it is not always possible to display all the information in an effective visual field of the driver. Consequently, even when a virtual image is displayed on an HUD, unless the line of sight of a driver is directed to the displayed virtual image, there is a possibility that not only a real image but also the virtual image that is intended to facilitate the recognition of the real image may be overlooked.

The invention provides a vehicle display device that assists a driver by displaying an effective virtual image that can reduce the oversight by the driver.

The invention discloses a vehicle display device. The vehicle display device according to an aspect of the invention includes: a display object detection unit configured to detect an object and a position of the object from an outside of a vehicle as a display object; and a display processing unit configured to display on a display, the display being mounted in the vehicle, at least one of a first virtual image displayed in a first display mode and a second virtual image displayed in a second display mode. The first virtual image and the second virtual image correspond to the detected object, and the second display mode has a higher recognition possibility of a driver for presence of the object than the first display mode. And the vehicle display device includes a region calculation unit. The region calculation unit is configured to calculate a first region and a second region in visual fields of the driver. The first region is a region in which it is easier for the driver to acquire information than in the second region. The second region is a region outside the first region. The display processing unit is configured to display the second virtual image in the second region, and the first virtual image in the first region according to the position of the object.

The information acquisition ability differs according to the relative position with respect to the line of sight and the point of view of the driver. In this regard, according to the configuration described above, the virtual image that is displayed in the first region is assigned the first display mode that makes it easy to recognize an attribute of the object such that the object is a human being, while the virtual image that is displayed in the second region is assigned the second display mode that makes it easy to notice the presence itself of the object. The first display mode is a display suitable for the first region that is a visual field in which it is easy to acquire information, while the second display mode is a display suitable for the second region that is a visual field in which it is difficult to acquire information. Therefore, a display in the second display mode is suppressed in the first region, so that the possibility of making the driver feel botheration is suppressed and the attribute of the object is made easy to acquire. On the other hand, not the first display mode that is difficult to recognize, but the second display mode that makes it easy to notice the presence itself of the object is used in the second region, so that it is possible to reduce the oversight of the virtual image. With this configuration, it is possible to assist the driver by displaying the effective virtual image that can reduce the oversight by the driver.

In the aspect of the invention, the first region may be a region corresponding to a central visual field and an effective visual field, and the second region may be a region corresponding to a peripheral visual field and a region outside of the peripheral visual field.

According to such a configuration, the recognizability of the attribute of the object is enhanced by the first display mode in the first region being the central visual field and the effective visual field where the information discrimination ability is high, while the presence of the object is expected to be quickly acquired by the second display mode in the second region being the peripheral visual field where the information discrimination ability is low.

In the aspect of the invention, the display processing unit may be configured to emphasize the second virtual image in the second region, as a display position of the second virtual image gets away from the first region.

It becomes more difficult to notice the second display mode as going away from the first region, but according to such a configuration, it is possible to make the driver notice the virtual image by changing it to a more noticeable display according to the distance away from the first region.

In the aspect of the invention, the region calculation unit may be configured to calculate to narrow the first region according to at least one of an increase in speed of the vehicle and an increase in driving load of the driver.

According to such a configuration, even when the size of the first region is changed according to at least one of the speed of the vehicle and the driving load of the driver, it is possible to make the driver notice the virtual image by changing the display mode of the virtual image according to that change.

In the aspect of the invention, the display processing unit may be configured to emphasize the second virtual image by expanding a display region of the second virtual image.

According to such a configuration, the possibility of making the driver recognize the virtual image is enhanced by expanding the display region of the virtual image.

In the aspect of the invention, the display processing unit may be configured to emphasize the second virtual image by periodically increasing and decreasing a size of a display region of the second virtual image.

According to such a configuration, the possibility of making the driver recognize the virtual image is enhanced by periodically increasing and decreasing the size of the display region of the virtual image.

In the aspect of the invention, the region calculation unit may be configured to calculate the first region. The first region may be calculated in a plane facing the driver, including a point of view of the driver, and may be calculated in upward, downward, left, and right directions from the point of view of the driver

According to such a configuration, the first region can be quickly detected as a plane. In addition, the outside of the first region can be quickly detected as the second region.

In the aspect of the invention, the region calculation unit may be configured to calculate the first region. The first region may be calculated in a plane facing the driver, including a point of view of the driver, and may be calculated in upward, downward, left, and right directions from the point of view of the driver, and in front and rear directions perpendicular to the plane facing the driver.

According to such a configuration, the detection accuracy for the first region and the second region is enhanced, so that it is possible to display the virtual image in a more suitable display mode.

In the aspect of the invention, when the display object detection unit detects, as the object, a sign indicating an information on a region located in a travel path of the vehicle, the display processing unit may be configured to display the second virtual image in a range including both the first region and the second region, when the display processing unit displays a virtual image in the second region. The second virtual image may correspond to the sign.

According to such a configuration, when the object of which the virtual image is to be displayed in the second region is the sign indicating the information on the region located in the travel path, for example, a road closed sign, its virtual image is displayed in the first region and the second region in the second display mode. With this configuration, the virtual image can be displayed more suitably for the sign indicating the information on the region located in the travel path.

In the aspect of the invention, when the display object detection unit detects as the object a sign indicating an information on a region located in a travel path of the vehicle, the display processing unit may be configured to display the first virtual image corresponding to the sign in the first region.

In the aspect of the invention, the vehicle display device may further include an eyeball position sensor configured to detect a position of an eyeball of the driver and a direction of the eyeball of the driver. The region calculation unit may be configured to calculate the central visual field, the effective visual field, and the peripheral visual field based on the position of an eyeball of the driver and a direction of the eyeball of the driver.

In the aspect of the invention, the display processing unit may be configured to display the first virtual image and the second virtual image so as to be superimposed on the object as seen from the position of the eyeball of the driver detected by the eyeball position sensor.

In the aspect of the invention, the display processing unit may be configured to display the first virtual image on the display, the first virtual image allowing the driver to recognize of an attribute of the object.

In the aspect of the invention, the first virtual image may include more character information or more symbol information compared to the second virtual image. The character information or the symbol information may allow the driver to recognize of the attribute of the object.

In the aspect of the invention, the second display mode may include a display mode having a higher brightness than the first display mode, or a blinking display mode.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram showing a schematic configuration of an embodiment that embodies a vehicle display device;
FIG. 2 is a block diagram showing details of the configuration of the vehicle display device in the embodiment;
FIG. 3 is a flowchart showing a sequence according to which the vehicle display device determines a display mode;
FIG. 4 is a list showing the kinds of human visual fields based on "Human Factors for Designers of Naval Equipment, 1971";
FIG. 5 is a schematic diagram exemplarily showing a relationship between the kind of human visual field and the distance from the point of view;
FIG. 6A is a schematic diagram exemplarily showing a relationship between the kind of human visual field, the expansion with respect to the direction of the line of sight, and the distance, wherein there is shown an example in which the distance is near;
FIG. 6B is a schematic diagram exemplarily showing a relationship between the kind of human visual field, the expansion with respect to the direction of the line of sight, and the distance, wherein there is shown an example in which the distance is farther than that in FIG. 6A;
FIG. 7A is a schematic diagram exemplarily showing a first example of a virtual image corresponding to a relationship between an object and the kind of visual field in the embodiment, wherein the object is located in a peripheral visual field;
FIG. 7B is a schematic diagram exemplarily showing a first example of a virtual image corresponding to a relationship between an object and the kind of visual field in the embodiment, wherein the object is located in an effective visual field;
FIG. 8A is a schematic diagram exemplarily showing a second example of a virtual image corresponding to a relationship between an object and the kind of visual field in the embodiment, wherein the object is located in a peripheral visual field;
FIG. 8B is a schematic diagram exemplarily showing a second example of a virtual image corresponding to a relationship between an object and the kind of visual field in the embodiment, wherein the object is located in an effective visual field;
FIG. 9A is a schematic diagram exemplarily showing a third example of a virtual image corresponding to a relationship between an object and the kind of visual field in the embodiment, wherein the object is located in a peripheral visual field;
FIG. 9B is a schematic diagram exemplarily showing a third example of a virtual image corresponding to a relationship between an object and the kind of visual field in the embodiment, wherein the object is located in an effective visual field;
FIG. 10A is a schematic diagram exemplarily showing a fourth example of a virtual image corresponding to a relationship between an object and the kind of visual field in the embodiment, wherein the object is located in a peripheral visual field;
FIG. 10B is a schematic diagram exemplarily showing a fourth example of a virtual image corresponding to a relationship between an object and the kind of visual field in the embodiment, wherein the object is located in an effective visual field;
FIG. 11A is a schematic diagram exemplarily showing a fifth example of a virtual image corresponding to a relationship between an object and the kind of visual field in the embodiment, wherein the object (another vehicle) is located in a peripheral visual field;
FIG. 11B is a schematic diagram exemplarily showing a fifth example of a virtual image corresponding to a relationship between an object and the kind of visual field in the embodiment, wherein the object (another vehicle) is located in an effective visual field;
FIG. 12 is a schematic diagram exemplarily showing a sixth example of a virtual image corresponding to a relationship between an object and the kind of visual field in the embodiment, wherein a sign as the object is located in a peripheral visual field;
FIG. 13A is a schematic diagram exemplarily showing a seventh example of a virtual image corresponding to a relationship between an object and the kind of visual field in the embodiment, wherein the object (sign) is located in a peripheral visual field;
FIG. 13B is a schematic diagram exemplarily showing a seventh example of a virtual image corresponding to a relationship between an object and the kind of visual field in the embodiment, wherein the object (sign) is located in an effective visual field;
FIG. 14A is a schematic diagram exemplarily showing a relationship in which the size of a visual field changes according to the speed, in another embodiment that embodies a vehicle display device, wherein there is shown the size of the visual field when the speed is low; and
FIG. 14B is a schematic diagram exemplarily showing a relationship in which the size of a visual field changes according to the speed, in the embodiment that embodies the vehicle display device, wherein there is shown the size of the visual field when the speed is high.

### DETAILED DESCRIPTION OF EMBODIMENTS

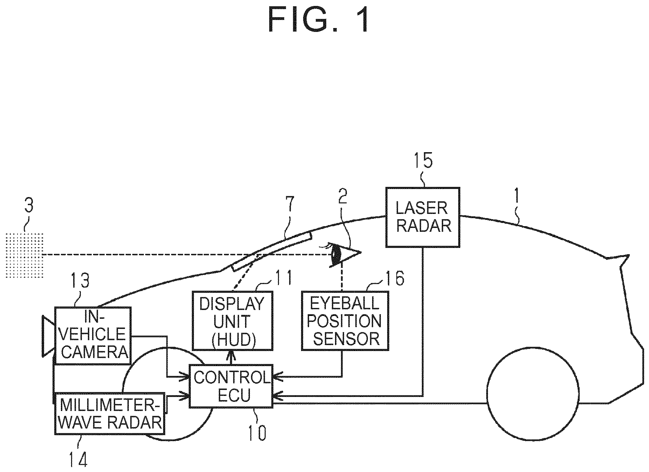

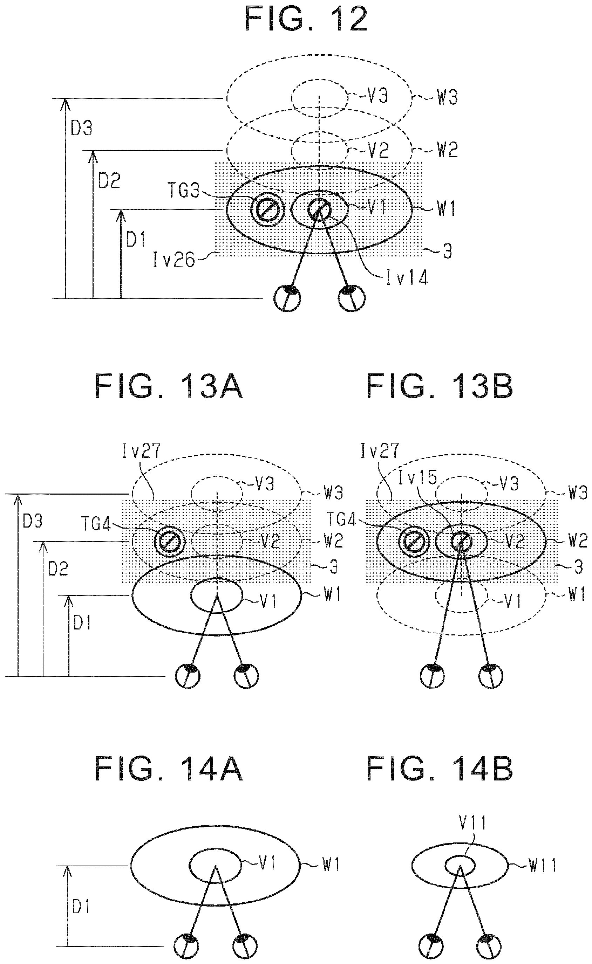

Referring to FIGS. 1 to 13B, a description will be given of an embodiment in which a vehicle display device is embodied so as to be installed in a vehicle. First, referring to FIG. 1, a vehicle 1 in which the vehicle display device of this embodiment is installed will be schematically described.

The vehicle 1 is, for example, a passenger car. The vehicle 1 is operated by a driver according to recognition of a vehicle-outside environment in front of the vehicle through an eyeball 2 of the driver. The vehicle 1 includes an in-vehicle camera 13 that captures an image of a vehicle-outside environment in front of the vehicle, and a millimeter-wave radar 14 and a laser radar 15 that detect an object present in a vehicle-outside environment in front of the vehicle. The vehicle 1 further includes an eyeball position sensor 16 that detects the position and direction of the eyeball 2 of the driver, a display unit 11 that projects a virtual image 3 onto a front window 7 as a display of the vehicle 1, and a control ECU 10 that controls the display unit 11 to project the virtual image 3. Based on the image processing result of an image captured by the in-vehicle camera 13 and the detection results of the millimeter-wave radar 14 and the laser radar 15, the vehicle 1 detects a human being, a preceding vehicle, an obstacle, or the like as an object to be notified to the driver. Then, in the vehicle 1, the virtual image 3 corresponding to a detected object is projected onto the front window 7 from the display unit 11. A virtual image projected onto the front window 7 is recognized by the driver as if the virtual image were displayed outside the vehicle. Accordingly, the virtual image 3 is displayed so as to overlap an object present in an external environment in front of the vehicle and a real image around the object.

The front window 7 is a window provided at the front of the vehicle 1. The driver recognizes an external environment through the front window 7 and views an object present in the recognized external environment, and recognizes a virtual image that is projected by the display unit 11. The front window 7 may be surface-treated to allow the virtual image to be properly projected.

The in-vehicle camera 13 is a camera that captures an image of an external environment in front of the vehicle, and is a CCD camera or the like. The in-vehicle camera 13 outputs the captured image to the control ECU 10. The millimeter-wave radar 14 is a radio radar and has a distance measurement function of measuring the distance between the vehicle 1 and an object present in a detection range in front of the vehicle, and a speed measurement function of measuring the relative speed between the vehicle 1 and the object. The millimeter-wave radar 14 outputs to the control ECU 10 the detection result about the object that is detected to be present around the vehicle 1.

The laser radar 15 is an optical radar (so-called LIDAR) and has a distance measurement function of measuring the distance between the vehicle 1 and an object present in a detection range in front of the vehicle, and a speed measurement function of measuring the relative speed between the vehicle 1 and the object. The laser radar 15 outputs to the control ECU 10 the detection result about the object that is detected to be present around the vehicle 1.

The eyeball position sensor 16 includes a camera that detects the eyeball position. The eyeball position sensor 16 detects the direction of the eyeball 2 of the driver and, based on the detection result, detects the line of sight and the point of view of the driver. The eyeball position sensor 16 outputs the detection result about the detected line of sight and point of view to the control ECU 10.

The display unit 11 is a projector of an image for a so-called HUD and projects onto the front window 7 the virtual image 3 corresponding to a command from the control ECU 10. The image for the HUD projected onto the front window 7 is not formed on the front window 7, but is recognized by the driver as the virtual image 3 that is displayed outside the vehicle.

The control ECU 10 detects the presence or absence of an object based on the information acquired from the in-vehicle camera 13, the millimeter-wave radar 14, and the laser radar 15 and determines whether or not a virtual image display of a detected object is necessary. With respect to an object of which a virtual image display is determined to be necessary, the control ECU 10 displays the virtual image 3 in front of the driver through projection by the display unit 11.

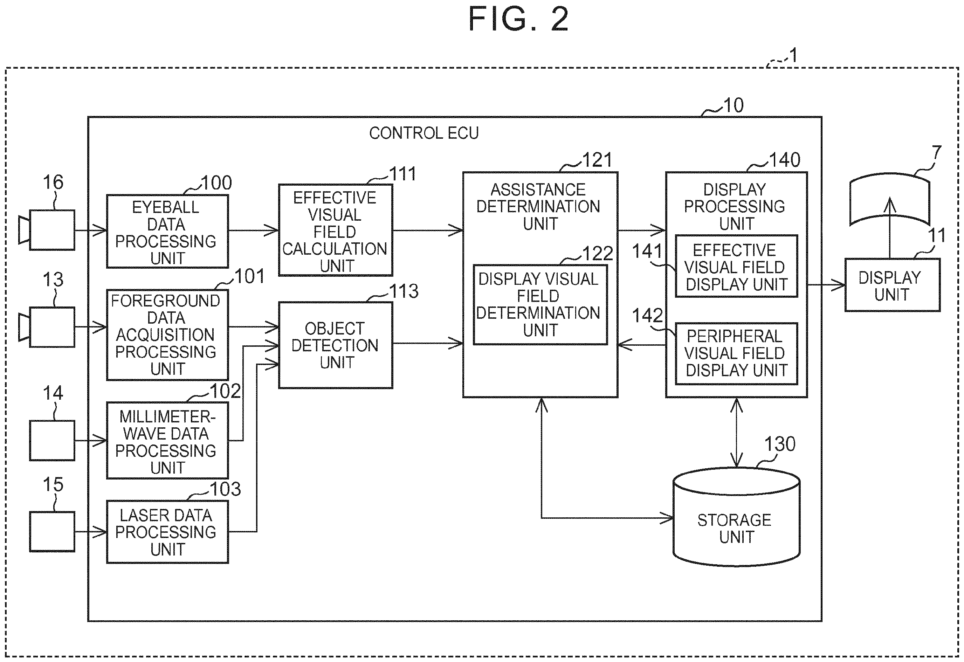

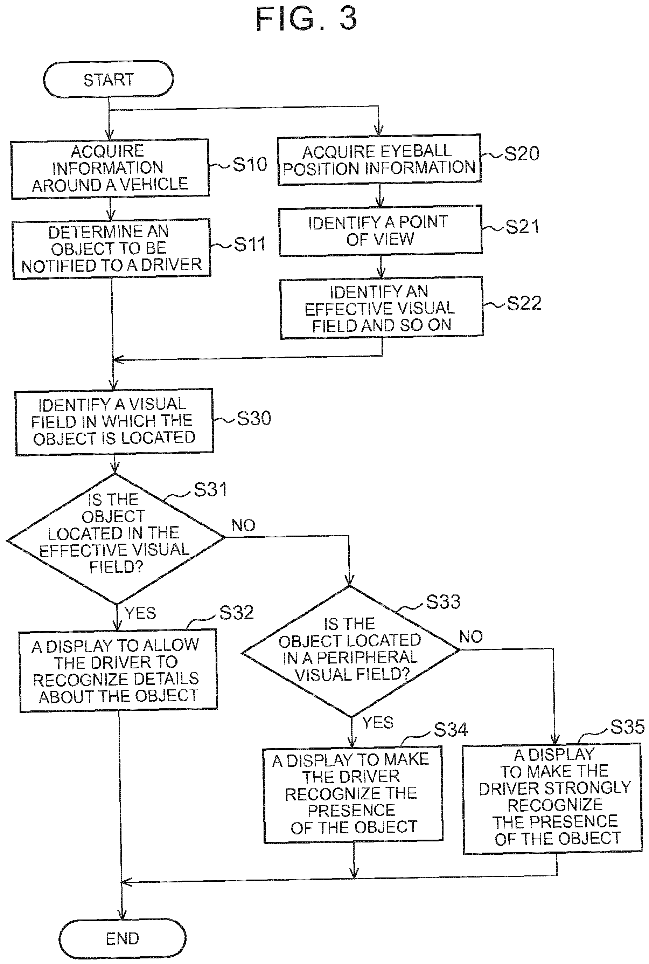

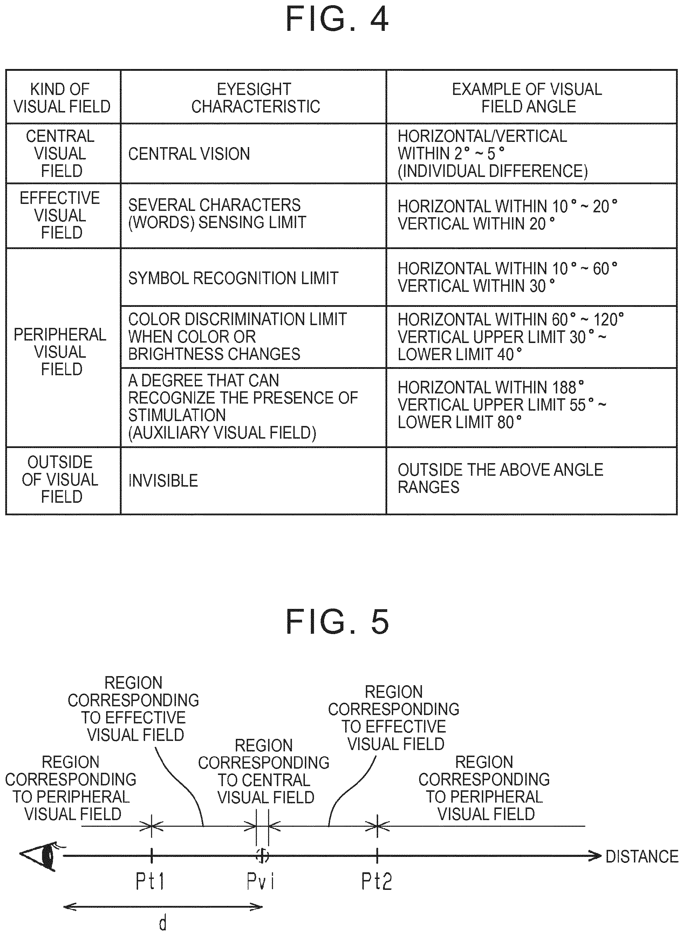

Referring to FIGS. 2 and 3, a description will be given of the control ECU 10 and the process of setting a display mode of the virtual image 3 in the control ECU 10. Before describing them, however, visual fields of the driver will be described with reference to FIGS. 4 to 6B.

As shown in FIG. 4, the kinds of visual fields of the driver are mainly classified into a "central visual field", an "effective visual field", and a "peripheral visual field". Further, "outside of visual field" representing the visual field outer side is present outside the "peripheral visual field". The respective visual fields have their own visual field characteristics. For example, the "central visual field" is the central vision as its eyesight characteristic and has the highest discrimination ability for visual information. The "effective visual field" has as its eyesight characteristic a discrimination ability that can recognize several characters (words) as visual information. The "peripheral visual field" has as its eyesight characteristic a discrimination ability that can minimally distinguish the presence or absence of an object. Depending on the height of the discrimination ability, the "peripheral visual field" is divided into a visual field where it is possible to recognize a symbol (shape), a visual field where it is possible to discriminate a changing color, and a visual field (auxiliary visual field) of a degree that can recognize the presence of visual information. Incidentally, "outside of visual field" represents a region where it is not possible to notice visual information, i.e. an invisible region.

According to "Human Factors for Designers of Naval Equipment, 1971", the ranges of the visual fields are defined by visual field angles. Individual differences are large in the visual field angles. An example of the ranges of the visual fields is defined below. For example, the "central visual field" is such that the visual field angle is in a range of 2° to 5° in both the horizontal direction and the vertical direction. The "effective visual field" is such that the visual field angle is in a range of 10° to 20° in the horizontal direction and in a range of 20° in the vertical direction. In the "peripheral visual field", the range where it is possible to recognize a symbol is such that the visual field angle is in a range of 10° to 60° in the horizontal direction and in a range of 30° in the vertical direction. In the "peripheral visual field", the range where it is possible to discriminate a changing color is such that the visual field angle is in a range of 60° to 120° in the horizontal direction and in a range of 30° upward and 40° downward in the vertical direction. In the "peripheral visual field", the auxiliary visual field is such that the visual field angle is in a range of 188° in the horizontal direction and in a range of 55° upward and 80° downward in the vertical direction.

As shown in FIG. 5, the eyesight characteristic changes also in the direction of the line of sight of the driver according to the distance from the point of view of the driver. Therefore, it is considered that there are a region corresponding to a central visual field, a region corresponding to an effective visual field, and a region corresponding to a peripheral visual field respectively, also in the direction of the line of sight of the driver. For example, when a point of view Pvi is located at a position of a distance d from the driver, the point of view Pvi and its neighborhood are a region corresponding to a central visual field. Further, a range from the region corresponding to the central visual field to a predetermined position Pt1 on the near side and a range from the region corresponding to the central visual field to a predetermined position Pt2 on the far side, i.e. a range from the near position Pt1 to the far position Pt2, excluding the region corresponding to the central visual field, is a region corresponding to an effective visual field. On the other hand, a range nearer than the near position Pt1 and a range farther than the far position Pt2 are regions corresponding to peripheral visual fields, respectively.

Since the central visual field is necessarily present in the range surrounded by the effective visual field, when the outer circumference of the region of the effective visual field is calculated, the central visual field is included in that region. Therefore, for convenience of description, this embodiment will be described hereinbelow assuming that the central visual field is included in the effective visual field.

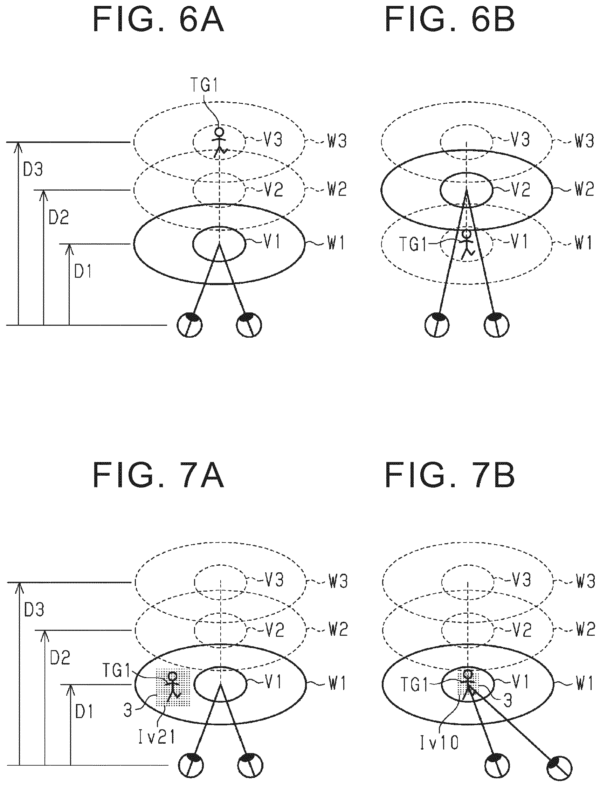

FIGS. 6A and 6B exemplarily show an effective visual field and a peripheral visual field. In FIGS. 6A and 6B, distances D1, D2, and D3 respectively indicate distances in the direction of the line of sight of the driver in the order of distance nearer to the driver. When the point of view is located at the distance D1, the effective visual field is a region V1 and the peripheral visual field is a region W1, when the point of view is located at the distance D2, the effective visual field is a region V2 and the peripheral visual field is a region W2, and when the point of view is located at the distance D3, the effective visual field is a region V3 and the peripheral visual field is a region W3.

That is, as shown in FIG. 6A, when the point of view is located at the distance D1, the effective visual field is the region V1 and the peripheral visual field is the region W1 at a position of the distance D1 from the driver. In this event, the regions V2 and W2 at the distance D2 and the regions V3 and W3 at the distance D3, all of which are located away from the point of view of the driver to the far side, are all the regions corresponding to peripheral visual fields from their eyesight characteristics. For example, an object TG1 located at the distance D3 is located in the peripheral visual field of the driver whose point of view is located at the distance D1.

In a similar way, as shown in FIG. 6B, when the point of view is located at the distance D2, the effective visual field is the region V2 and the peripheral visual field is the region W2 at a position of the distance D2 from the driver. In this event, the regions V1 and W1 at the distance D1 are located away from the point of view of the driver to the near side. And the regions V3 and W3 at the distance D3 are located away from the point of view of the driver to the far side. The regions V1 and W1 and the regions V3 and W3 are all the regions corresponding to peripheral visual fields from their eyesight characteristics. For example, an object TG1 located at the distance D1 is located in the peripheral visual field of the driver whose point of view is located at the distance D2.

As shown in FIG. 2, the control ECU 10 includes a microcomputer having a computing unit and a storage unit. Accordingly, the control ECU 10 performs predetermined processes to provide predetermined functions by reading into the computing unit control programs and various parameters stored in a storage unit 130 and executing them. In this embodiment, the control ECU 10 provides information on driving assistance through a virtual image display. As one of the processes in providing the information, the control ECU 10 executes a display mode setting process (see FIG. 3) for determining a display mode of the virtual image 3 shown in FIG. 1.

The control ECU 10 includes an eyeball data processing unit 100 that acquires the detection result of the eyeball position sensor 16. The control ECU 10 further includes a foreground data acquisition processing unit 101 that acquires an image captured by the in-vehicle camera 13, a millimeter-wave data processing unit 102 that acquires information such as position information about an object, from the millimeter-wave radar 14 and processes them, and a laser data processing unit 103 that acquires information such as position information about an object, from the laser radar 15 and processes them. The control ECU 10 further includes an effective visual field calculation unit 111 as a region calculation unit that calculates an effective visual field of the driver, and an object detection unit 113 as a display object detection unit that detects an object present in front of the vehicle 1. The control ECU 10 further includes an assistance determination unit 121 that determines an object of which the virtual image 3 is to be displayed. The assistance determination unit 121 includes a display visual field determination unit 122 that determines whether or not the virtual image 3 is located in an effective visual field of the driver. The control ECU 10 further includes the storage unit 130 that stores information such as information necessary for determining an object, and a display processing unit 140 that performs a process of providing information on an object to the driver.

The eyeball data processing unit 100 acquires information on the line of sight and the point of view from the eyeball position sensor 16. The eyeball data processing unit 100 outputs the acquired information to the effective visual field calculation unit 111.

The effective visual field calculation unit 111 calculates a point of view and an effective visual field of the driver based on the information on the line of sight and the point of view of the driver acquired from the eyeball data processing unit 100. Then, the effective visual field calculation unit 111 outputs the calculated point of view and effective visual field of the driver to the assistance determination unit 121. The effective visual field calculation unit 111 calculates the point of view as a focus position that is calculated from the directions of the lines of sight of both eyes. The effective visual field calculation unit 111 calculates the effective visual field as a region that is determined by the visual field angle in the horizontal direction and the visual field angle in the vertical direction with respect to the lines of sight of both eyes.

Further, the effective visual field calculation unit 111 calculates a peripheral visual field that is present outside the effective visual field and outputs the peripheral visual field calculation result to the assistance determination unit 121. The effective visual field calculation unit 111 may further calculate a central visual field that is present in the effective visual field, visual fields each defined by dividing the peripheral visual field per eyesight characteristic, and a region outside the visual fields and may output the calculated visual fields to the assistance determination unit 121. Like the effective visual field, these peripheral visual field and other visual fields are each calculated from a range that is determined by the visual field angle in the horizontal direction and the visual field angle in the vertical direction with respect to the lines of sight.

Further, the effective visual field calculation unit 111 limits the effective visual field to a predetermined range from the position of the point of view with respect to the direction of the line of sight (far and near direction) of the driver. For example, the effective visual field calculation unit 111 limits the effective visual field to a range between the near position Pt1 (see FIG. 5) and the far position Pt2 (see FIG. 5). Accordingly, the effective visual field calculation unit 111 calculates as peripheral visual fields a region nearer than the near position Pt1 with respect to the point of view and a region farther than the far position Pt2 with respect to the point of view even when those regions are included in the effective visual field in terms of the visual field angle.

In this embodiment, the effective visual field calculated by the effective visual field calculation unit 111 is a first region, while the region outside the calculated effective visual field is a second region. The foreground data acquisition processing unit 101 acquires an image in front of the vehicle captured by the in-vehicle camera 13. Further, the foreground data acquisition processing unit 101 outputs to the object detection unit 113 a detection image that is obtained by applying predetermined image processing to the acquired image as preprocessing for detecting an object.

The millimeter-wave data processing unit 102 acquires information such as the position and shape of an object detected by the millimeter-wave radar 14 and outputs to the object detection unit 113 detection information that is obtained by applying predetermined processing to the acquired information as preprocessing for detecting the object.

The laser data processing unit 103 acquires information such as the position and shape of an object detected by the laser radar 15 and outputs to the object detection unit 113 detection information that is obtained by applying predetermined processing to the acquired information as preprocessing for detecting the object.

The object detection unit 113 detects the objects in front of the vehicle based on the input detection image and detection information. For example, the object detection unit 113 detects a human being, a preceding vehicle, an obstacle, or the like as the object from the detection image. The object detection unit 113 outputs the detection result about the objects to the assistance determination unit 121.

The assistance determination unit 121 acquires the detection result about the objects from the object detection unit 113 and selects the object, from the acquired objects, that should be notified to the driver. That is, the assistance determination unit 121 determines whether or not the driving assistance by a virtual image display is necessary for the acquired objects. Then, the assistance determination unit 121 outputs to the display processing unit 140 a command to display a virtual image for the object of which the virtual image display is determined to be necessary.

That is, the assistance determination unit 121 determines the necessity of the driving assistance by the virtual image display based on the distance between the vehicle 1 and the object, the position of the object in the travel path of the vehicle 1, the possibility of collision between the vehicle 1 and the object, and so on. For example, the assistance determination unit 121 determines that the driving assistance by the virtual image display is necessary for the object that is located in the travel path of the vehicle 1 and that is approaching close to the vehicle 1. Further, for example, the assistance determination unit 121 acquires the calculation result about the possibility of collision to the object and determines that the driving assistance by the virtual image display is necessary for the object to which the possibility of collision is high.

The assistance determination unit 121 includes the display visual field determination unit 122 that acquires the effective visual field of the driver from the effective visual field calculation unit 111 and determines whether or not the object is included in the acquired effective visual field.

The display visual field determination unit 122 performs a process of determining whether or not the position of the object is located in the effective visual field. For example, the display visual field determination unit 122 makes a comparison between the position of the object acquired from the object detection unit 113 and the effective visual field acquired from the effective visual field calculation unit 111, thereby determining whether or not the object is located in the effective visual field. The display visual field determination unit 122 outputs to the assistance determination unit 121 the determination result of whether or not the position of the object is located in the effective visual field.

The assistance determination unit 121 determines to display the virtual image 3 of the object in a first display mode when the position of the object is included in the effective visual field, and determines to display the virtual image 3 of the object in a second display mode when the position of the object is not included in the effective visual field. Herein, the first display mode is a display mode that is suitable for the driver to recognize an attribute of the object, while the second display mode is a display mode that is suitable for the driver to notice the presence of the object. As will be described in detail later, the second display mode includes a mode of enlarging the display range, a mode of increasing the brightness, a mode of changing the color, a blinking mode, and so on.

The assistance determination unit 121 outputs to the display processing unit 140 a command to display the virtual image 3 in the display mode selected from the first display mode and the second display mode. The storage unit 130 is a nonvolatile storage device and can be read and written by the assistance determination unit 121 and the display processing unit 140. The first display mode and the second display mode, for example, are stored in the storage unit 130.

Based on the command from the assistance determination unit 121, the display processing unit 140 performs display processing of the virtual image 3 that is to be displayed on the front window 7. The display processing unit 140 outputs to the display unit 11 the display mode of the virtual image 3 that is to be projected onto the front window 7. Further, the display processing unit 140 outputs to the assistance determination unit 121 the position where the virtual image 3 is to be displayed.

In response to the command about the virtual image 3 received from the assistance determination unit 121, the display processing unit 140 causes the virtual image 3 corresponding to this received command to be displayed at the proper position and in the proper display mode. The display processing unit 140 outputs to the display unit 11 a command to project the virtual image 3 of which the position and the display mode are determined. The display processing unit 140 includes an effective visual field display unit 141 that causes the virtual image 3 to be displayed in the first display mode, and a peripheral visual field display unit 142 that causes the virtual image 3 to be displayed in the second display mode.

The effective visual field display unit 141 assigns the first display mode to the virtual image 3. The first display mode is a display mode in which the driver can recognize the attribute of the object. Since the first display mode is a display corresponding to the effective visual field where the information discrimination ability is high, the first display mode has at least one display mode among a mode of facilitating the identification of the object, a mode of enhancing the recognizability of the object, and so on. The first display mode may include character information, symbol information, or the like that can allow the driver to clearly recognize the attribute of the object.

The peripheral visual field display unit 142 assigns the second display mode to the virtual image 3. The second display mode is a display mode in which the driver can notice the presence of the object. Since the second display mode is a display corresponding to other than the effective visual field, the second display mode has at least one display mode among a mode of rough shape (symbol), a mode of changing the color or brightness, a mode of providing the stimulation to the visual field, and so on.

Referring to FIG. 3, the operation of the display mode setting process in the vehicle display device will be described. This setting process is repeatedly executed at a predetermined period. Conditions necessary for the setting process are stored in flags or the like.

As shown in FIG. 3, the vehicle display device acquires information around the vehicle from the foreground data acquisition processing unit 101, the millimeter-wave data processing unit 102, and the laser data processing unit 103 (step S10) and determines, in the assistance determination unit 121, an object to be notified to the driver from objects detected in the object detection unit 113 (step S11). Further, the vehicle display device acquires eyeball position information from the eyeball data processing unit 100 (step S20) so as to identify a point of view (step S21) and an effective visual field and so on (step S22) in the effective visual field calculation unit 111.

From the visual fields of the driver and the object to be notified to the driver, the vehicle display device identifies, in the assistance determination unit 121, the visual field in which the object is located (step S30). In the assistance determination unit 121, it is determined whether or not the object is located in the effective visual field (step S31). This determination is made by making a comparison between the locating position of the object and the effective visual field of the driver.

When the object is determined to be located in the effective visual field (YES at step S31), the vehicle display device determines the display mode of the virtual image 3 to be the first display mode in the assistance determination unit 121. Then, the display processing unit 140 causes the display unit 11 to project the virtual image 3 whose display mode is determined to be the first display mode (step S32). In this way, the display mode setting process is finished.

On the other hand, when the object is determined to be located outside the effective visual field (NO at step S31), the vehicle display device determines whether or not the object is located in a peripheral visual field (step S33). This determination is made by making a comparison between the locating position of the object and the peripheral visual field of the driver.

When the object is determined to be located in the peripheral visual field (YES at step S33), the vehicle display device determines the display mode of the virtual image 3 to be the second display mode in the assistance determination unit 121. Then, the display processing unit 140 causes the display unit 11 to project the virtual image 3 whose display mode is determined to be the second display mode (step S34). In this way, the display mode setting process is finished.

On the other hand, when the object is determined to be located outside the peripheral visual field (NO at step S33), the vehicle display device determines the display mode of the virtual image 3 to be the second display mode in the assistance determination unit 121. In this event, since there is a possibility that even when the object is located outside the peripheral visual field, the object may enter the peripheral visual field due to a change in the travel direction or a change in the line of sight, a display that can enhance the recognizability even in a visual field in which the recognition ability is low, i.e. a display that makes the driver more strongly recognize the presence, is determined as a more emphasized display. Then, the display processing unit 140 causes the display unit 11 to project the virtual image 3 whose display mode is determined to be the more emphasized second display mode (step S35). In this way, the display mode setting process is finished. The more emphasized second display mode is a mode obtained by partially changing the setting of the second display mode and may be considered to increase the size of a display so as to reach the peripheral visual field or to display an icon indicating the object in the peripheral visual field.

Consequently, the virtual image 3 located in the effective visual field is displayed in the first display mode, while the virtual image 3 located outside the effective visual field is displayed in the second display mode. Next, referring to FIGS. 7A to 13B, examples of manners for the first display mode and the second display mode will be described. It is assumed that an object which will be described herein is an object of which a virtual image display has been determined to be necessary.

Referring to FIGS. 7A and 7B, a description will be given of a manner in which an object TG1 located at a distance D1 moves from a region W1 of a peripheral visual field to a region V1 of an effective visual field. As shown in FIG. 7A, the point of view is located at the same distance D1 as the object TG1 and the object TG1 is located in the region W1 of the peripheral visual field, so that the virtual image 3 of the object TG1 is displayed as a virtual image Iv21 of the second display mode. Herein, the virtual image Iv21 is a display including the object TG1 and being of a wider range than the object TG1. The display of the wider range than the object increases the possibility of making the driver more quickly notice the object TG1 and reduces the oversight by the driver. The virtual image Iv21 is in a display mode that performs a display of changing the color or brightness, or a luminous display (ambient display). The luminous display is a display that, for example, provides high brightness around the object TG1. The display of changing the color or brightness, or the luminous display also increases the possibility of making the driver more quickly notice the object TG1 and reduces the oversight by the driver.

The virtual image 3 that is displayed in the effective visual field is in the first display mode, while the virtual image 3 that is displayed in the peripheral visual field is in the second display mode. Therefore, it is suppressed that the virtual image 3 is displayed in the second display mode in the effective visual field, so that botheration is reduced and the attribute of the display object is made easy to acquire. Further, since the second display mode that is easy to recognize is used in the peripheral visual field, it is possible to suppress an increase in the processing load for the display.

Then, as shown in FIG. 7B, when the position of the object TG1 is moved to the region V1 of the effective visual field, the virtual image 3 of the object TG1 is displayed as a virtual image Iv10 of the first display mode. Herein, the virtual image Iv10 is a display that surrounds the object TG1 with an image having a simple shape such as a rectangular shape and having approximately the same size as the object TG1, thereby making it easy to recognize the object TG1. The display that surrounds the object with the image having approximately the same size as the object makes it easy for the driver to recognize not only the position of the object TG1, but also its attribute. For example, such a display makes it easy to recognize that the object TG1 is a pedestrian.

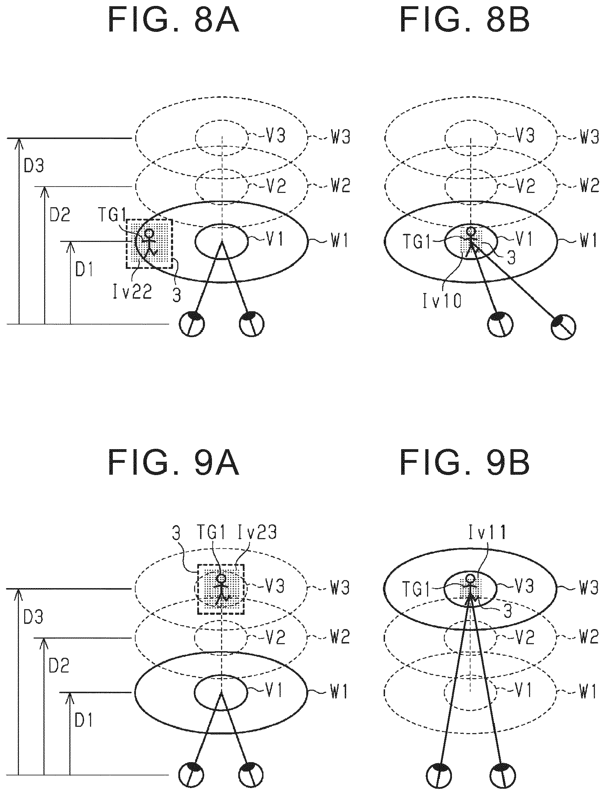

Like FIGS. 7A and 7B, FIGS. 8A and 8B show a manner in which an object TG1 located at a distance D1 moves from a region W1 of a peripheral visual field to a region V1 of an effective visual field. The example shown in FIG. 8A differs from FIG. 7A in that the virtual image 3 of the object TG1 is displayed as a virtual image Iv22 of the second display mode. Herein, the virtual image Iv22 is a display of an image including the object TG1 and being of a wider range than the object TG1, and this display periodically repeats the changes to increase and decrease in size. The display that increases and decreases in size enhances the possibility of making the driver notice the object TG1.

Then, in the example shown in FIG. 8B, like in FIG. 7B, when the position of the object TG1 is moved to the region V1 of the effective visual field, the virtual image 3 of the object TG1 is displayed as a virtual image Iv10 of the first display mode. Herein, the virtual image Iv10 is a display that surrounds the object TG1 with an image having a simple shape such as a rectangular shape and having approximately the same size as the object TG1, wherein the size of the display is fixed and does not increase or decrease. The display that surrounds the object with the image having approximately the same size as the object without increasing or decreasing in size makes it easy for the driver to recognize not only the position of the object TG1, but also its attribute.

Referring to FIGS. 9A and 9B, a description will be given of a manner in which while the point of view is located at a distance D1, since an object TG1 is located at a distance D3 that is located away from the point of view to the far side in the direction of the line of sight, the object TG1 is located in a region W3 of a peripheral visual field, and thereafter, the point of view is moved to the distance D3, so that the object TG1 is located in a region V3 of an effective visual field.

As shown in FIG. 9A, since the point of view is located at the distance D1, the object TG1 located at the distance D3 is located in the region W3 of the peripheral visual field, so that the virtual image 3 of the object TG1 is displayed as a virtual image Iv23 of the second display mode. Herein, like the virtual image Iv21 or the virtual image Iv22, the virtual image Iv23 is a display of an image including the object TG1 and being of a wider range than the object TG1. This enhances the possibility of making the driver notice the object TG1.

Then, as shown in FIG. 9B, since the point of view is moved to the distance D3, the object TG1 is located in the region V3 of the effective visual field, so that the virtual image 3 of the object TG1 is displayed as a virtual image Iv11 of the first display mode. Herein, like the virtual image Iv10, the virtual image Iv11 is a display that surrounds the object TG1 with an image having a simple shape such as a rectangular shape and having approximately the same size as the object TG1, thereby making it easy to recognize the object TG1. This makes it easy for the driver to recognize not only the position of the object TG1, but also its attribute.

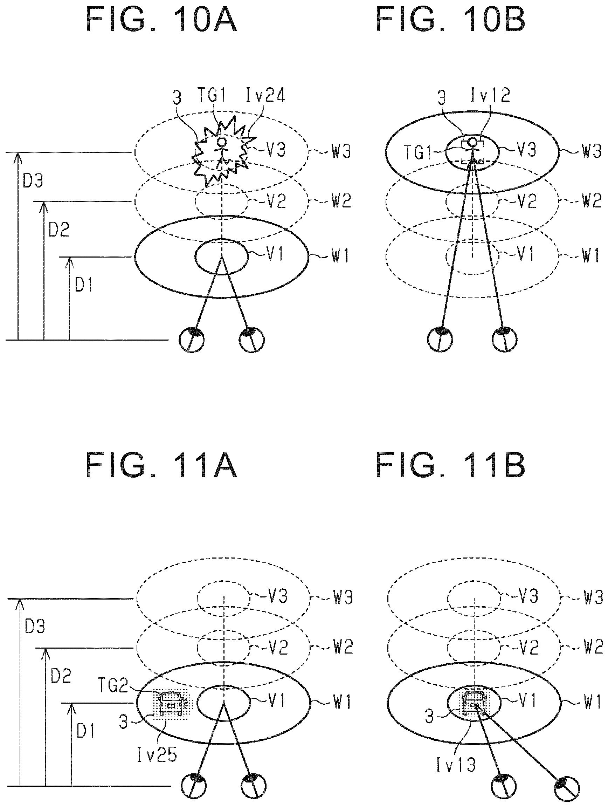

Like FIGS. 9A and 9B, FIGS. 10A and 10B show a manner in which while the point of view is located at a distance D1, since an object TG1 is located at a distance D3 that is located away from the point of view to the far side in the direction of the line of sight, the object TG1 is located in a region W3 of a peripheral visual field, and thereafter, the point of view is moved to the distance D3, so that the object TG1 is located in a region V3 of an effective visual field.

The example shown in FIG. 10A differs from FIG. 9A in that the virtual image 3 of the object TG1 is displayed as a virtual image Iv24 of the second display mode. Herein, the virtual image Iv24 is a display that blinks a display of an image including the object TG1 and being of a wider range than the object TG1. The display that blinks the display of the image of the wider range than the object TG1 enhances the possibility of making the driver notice the object TG1.

Then, as shown in FIG. 10B, since the point of view is moved to the distance D3, the object TG1 is located in the region V3 of the effective visual field, so that the virtual image 3 of the object TG1 is displayed as a virtual image Iv12 of the first display mode. Herein, the virtual image Iv12 is a display that surrounds a region, where the object TG1 is present, with a simple shape of a heavy line or the like, or a display that emphasizes the corners of such a region, thereby making it easy to recognize the object TG1. This makes it easy for the driver to recognize not only the position of the object TG1, but also its attribute.

Referring to FIGS. 11A and 11B, a description will be given of a manner in which an object TG2 being another vehicle located at a distance D1 moves from a region W1 of a peripheral visual field to a region V1 of an effective visual field. As shown in FIG. 11A, the point of view is located at the same distance D1 as the object TG2 and the object TG2 is located in the region W1 of the peripheral visual field, so that the virtual image 3 of the object TG2 is displayed as a virtual image Iv25 of the second display mode. Herein, the virtual image Iv25 is a display of an image including the object TG2 and being of a wider range than the object TG2, and is in a display mode with a shape indicating a direction of movement of the other vehicle, herein, with a right arrow indication pointed to the right. The display of the image of the wider range than the object enhances the possibility of making the driver notice the object as described above, and in addition, enhances the possibility of making the driver more quickly notice the direction of movement of the other vehicle even in the peripheral visual field by indicating the direction of movement of the other vehicle. The direction of movement of the other vehicle is specified from the result of detection of a direction indicator or the like in the image processing. The virtual image Iv25 may include a display of changing the color or brightness, or a luminous display (ambient display).

Then, as shown in FIG. 11B, when the position of the object TG2 is moved to the region V1 of the effective visual field, the virtual image 3 of the object TG2 is displayed as a virtual image Iv13 of the first display mode. Herein, like the virtual image Iv10, the virtual image Iv13 is a display that surrounds the object TG2 with an image having a simple shape such as a rectangular shape and having approximately the same size as the object TG2, thereby making it easy to recognize the object TG2.

Referring to FIG. 12, a description will be given of a manner in which an object TG3 being a road closed sign is located in a region W1 of a peripheral visual field at a distance D1. As shown in FIG. 12, the point of view is located at the same distance D1 as the object TG3 and the object TG3 is located in the region W1 of the peripheral visual field, so that the virtual image 3 of the object TG3 is displayed as a virtual image Iv26 of the second display mode. Herein, the virtual image Iv26 is a display of an image including the object TG3, being of a wider range than the object TG3, and being of a range including even a region V1 of an effective visual field. The display of the image of the range including even the region V1 of the effective visual field makes the driver notice the presence of the object TG3. Further, a virtual image Iv14 is displayed in the region V1 of the effective visual field. The virtual image Iv14 is the road closed sign. For example, when an object is a sign such as a road closed sign that indicates not a position, but an information on a region located in the travel direction, since it is not necessary to direct the line of sight of the driver to the particular sign, the virtual image Iv26 extending even to the region V1 of the effective visual field is displayed exceptionally. Further, by superimposing the virtual image Iv26 on the road closed area, it is also possible to make the driver recognize the road closed area. Further, by displaying the virtual image Iv14 in the region V1 of the effective visual field, it is possible to clearly transmit the meaning of the virtual image Iv26 to the driver. The road closed sign is detected in the image processing.

FIGS. 13A and 13B show a manner in which while the point of view is located at a distance D1, an object TG4 being a road closed sign is located in a region W2 of a peripheral visual field at a distance D2. As shown in FIG. 13A, the object TG4 is located at the distance D2 and the object TG4 is located in the region W2 of the peripheral visual field, so that the virtual image 3 of the object TG4 is displayed as a virtual image Iv27 of the second display mode. Herein, the virtual image Iv27 is a display of an image including the object TG4, being of a wider range than the object TG4, and being of a range including the region W2 of the peripheral visual field and a region V2 of an effective visual field at the distance D2. The display of the image of the range including the region W2 of the peripheral visual field and the region V2 of the effective visual field at the distance D2 makes the driver notice the presence of the object TG4. Since the point of view is located at the distance D1, the region V2 of the effective visual field at the distance D2 corresponds to a peripheral visual field, and therefore, at this point in time, a virtual image indicating the road closed sign is not displayed at a position corresponding to the region V2 of the effective visual field.

As shown in FIG. 13B, when the point of view is moved to the distance D2, the point of view and the object TG4 are both located at the distance D2. In this event, since the object TG4 is located in the region W2 of the peripheral visual field, the display of the virtual image Iv27 is continued for the object TG4. The virtual image Iv27 makes the driver recognize the object TG4. A virtual image Iv15 is displayed in the region V2 of the effective visual field. Like the virtual image Iv14, the virtual image Iv15 is the road closed sign. That is, since the point of view is moved to the distance D2, the discrimination ability for information in the region V2 of the effective visual field is enhanced, so that the meaning of the virtual image Iv27 can be clearly transmitted to the driver by displaying the virtual image Iv15 in the region V2 of the effective visual field.

Two or more of the first display modes described in FIGS. 7A to 13B can be arbitrarily combined together unless the respective effects are canceled, and likewise, two or more of the second display modes can be arbitrarily combined together unless the respective effects are canceled.

As described above, according to the vehicle display device of this embodiment, the following effects are obtained. (1) The virtual image 3 that is displayed in the effective visual field is assigned the first display mode that makes it easy to recognize an attribute of an object such that the object is a human being, while the virtual image 3 that is displayed in the peripheral visual field is assigned the second display mode that makes it easy to notice the presence of an object. The first display mode is a display suitable for the effective visual field that is a visual field in which it is easy to acquire information, while the second display mode is a display suitable for the peripheral visual field that is a visual field in which it is difficult to acquire information. Therefore, a display in the second display mode is suppressed in the effective visual field, so that the possibility of making the driver feel botheration is suppressed and the attribute of an object (object TG1 or the like) is made easy to acquire. On the other hand, not the first display mode that is difficult to recognize, but the second display mode that makes it easy to notice the presence itself of an object is used in the peripheral visual field, so that it is possible to reduce the oversight of the virtual image 3.
(2) The recognizability of an attribute of an object (object TG1 or the like) is enhanced by the first display mode in the effective visual field (including the central visual field) where the information discrimination ability is high, while the presence of an object is expected to be quickly acquired by the second display mode in the peripheral visual field where the information discrimination ability is low.
(3) Since a display in the second display mode is not performed in the effective visual field, botheration is reduced and the attribute of a display object is made easy to acquire. Further, since a display in the first display mode that is difficult to recognize is not performed in the peripheral visual field, it is possible to achieve a reduction in the processing load for the display.
(4) While it becomes more difficult to notice the virtual image 3 as the virtual image 3 going away from the effective visual field, it is possible to make the driver notice the virtual image 3 by changing it to a more noticeable display mode according to the distance away from the effective visual field toward the peripheral visual field and further toward the visual field outer side.
(5) The possibility of making the driver recognize the virtual image 3 is enhanced by expanding a display of the virtual image 3 in the peripheral visual field. (6) The possibility of making the driver recognize the virtual image 3 is enhanced by periodically increasing and decreasing the size of a display of the virtual image 3 in the peripheral visual field.
(7) Since the effective visual field and the peripheral visual field are detected also taking into account the direction of the line of sight (far and near direction), the detection accuracy for the effective visual field and the peripheral visual field is enhanced, so that it is possible to display the virtual image 3 in a more suitable display mode.

The embodiment described above can also be carried out in the following mode. • In the above-described embodiment, there is shown, by way of example, the case where the display mode of the virtual image 3 is changed from the second display mode to the first display mode when the object enters the effective visual field from the peripheral visual field. When the object is moved from the effective visual field to the peripheral visual field thereafter, since the object has once been recognized, the display mode of the virtual image 3 is maintained in the first display mode. However, when the importance of the object or the possibility of collision to the object is high, it may be configured to return the display mode to the second display mode.
- In the above-described embodiment, there is shown, by way of example, the case where when the object is not located in the effective visual field, it is further determined at step S33 in FIG. 3 whether or not the object is located in the peripheral visual field, but not limited thereto. Alternatively, the determination at step S33 may be omitted, and based on the determination that the object is not located in the effective visual field, the display mode of the virtual image may be determined to be the second display mode shown at step S34. Even with this configuration, the first display mode is assigned to the virtual image located in the effective visual field, so that the information acquisition ability is enhanced, while the second display mode is assigned to the virtual image located outside the effective visual field, so that the presence recognizability is enhanced.
- In the above-described embodiment, there is shown, by way of example, the case where the effective visual field and the peripheral visual field are detected also taking into account the direction of the line of sight (far and near direction), but not limited thereto. Alternatively, the effective visual field and the peripheral visual field may be detected only with respect to a planar direction in which the distance of the point of view is maintained. With this configuration, the effective visual field and the peripheral visual field can be quickly detected.
- In the above-described embodiment, there is no mention to the speed of the vehicle 1, but it is known that the effective visual field is narrowed as the speed of the vehicle 1 increases. Therefore, it may be configured to narrow the effective visual field as the speed of the vehicle increases. Specifically, as shown in FIGS. 14A and 14B, compared to a region V1 of an effective visual field and a region W1 of a peripheral visual field when the speed of the vehicle is low, a region V11 of an effective visual field and a region W11 of a peripheral visual field when the speed of the vehicle is high may be set to be small. That is, the region outside the region V11 of the effective visual field expands as the speed of the vehicle increases. With this configuration, even when the size of the effective visual field is changed according to the speed, it is possible to make the driver notice the virtual image by changing the display mode of the virtual image according to that change.

Similarly to the case where the effective visual field is narrowed as the speed of the vehicle increases, the effective visual field is also narrowed as the driving load of the driver increases. Therefore, it may be configured to narrow the effective visual field as the driving load of the driver increases. That is, to explain with reference to FIGS. 14A and 14B, as shown in FIGS. 14A and 14B, compared to a region V1 of an effective visual field and a region W1 of a peripheral visual field when the driving load of the driver is low, a region V11 of an effective visual field and a region W11 of a peripheral visual field when the driving load of the driver is high may be set to be small.

Further, expansion and narrowing of the effective visual field may be set taking into account both the speed of the vehicle and the driving load of the driver. • In the above-described embodiment, there is shown, by way of example, the case where the first region is the effective visual field and the second region is the region outside the effective visual field, but not limited thereto. The first region may be set to be larger or smaller than the effective visual field. Correspondingly, the second region changes automatically. With this configuration, the first region and the second region can be set according to eyesight characteristics for desired division.
- In the above-described embodiment, the examples of the virtual image 3 that is displayed when the object is located in the peripheral visual field have been described, but not limited thereto. The second display mode of the virtual image may be emphasized according to the distance away from the effective visual field. In this event, the second display mode is emphasized, with respect to the current display mode, by, for example, increasing the display range by a predetermined rate, enhancing the brightness by a predetermined rate, changing the color by a predetermined rate, or shortening the blinking period by a predetermined rate.
- In the above-described embodiment, there is shown, by way of example, the case where the display visual field determination unit 122 determines whether or not the position of the object is located in the effective visual field, but not limited thereto. The display visual field determination unit 122 may determine whether or not the position of the virtual image to be displayed by the HUD or the position of the virtual image displayed by the HUD is located in the effective visual field.
- In the above-described embodiment, there is shown, by way of example, the case where the in-vehicle camera 13 can capture an image in front of the vehicle 1, but not limited thereto. The in-vehicle camera may also be able to capture an image in a direction, other than in front of the vehicle, such as, for example, rightward, leftward, or rearward. This also applies to the detection directions of the millimeter-wave radar 14 and the laser radar 15. In this event, it is preferable that the eyeball position sensor can also detect the position of an eyeball in the left, right, or rear direction. With this configuration, a virtual image can be displayed in a proper display mode also with respect to a direction, other than in front of the vehicle, such as, for example, rightward, leftward, or rearward.
- In the above-described embodiment, there is shown, by way of example, the case where the virtual image 3 is projected onto the front window 7, but not limited thereto. A virtual image may be projected onto a projection member, other than the front window, such as a projection plate, as long as the virtual image can be projected.
- In the above-described embodiment, the description has been given of the case where the vehicle 1 is the passenger car, but not limited thereto. The vehicle may be an agricultural or industrial vehicle, a vehicle for construction or engineering work, or the like as long as an HUD can be installed.

## Claims

1. A vehicle display device, **characterized by** comprising:
a display object detection unit (113) configured to detect an object and a position of the object from an outside of a vehicle (1) as a display object;
a display processing unit (140) configured to display on a display (7), the display (7) being mounted in the vehicle (1), at least one of a first virtual image displayed in a first display mode and a second virtual image displayed in a second display mode, the first virtual image and the second virtual image corresponding to the detected object, the second display mode having a higher recognition possibility of a driver for presence of the object than the first display mode; and
a region calculation unit (111) configured to calculate a first region and a second region in visual fields of the driver, the first region being a region in which it is easier for the driver to acquire information than in the second region, the second region being a region outside the first region, wherein
the display processing unit (140) is configured to display the second virtual image in the second region, and the first virtual image in the first region according to the position of the object.

2. The vehicle display device according to claim 1, **characterized in that**
the first region is a region corresponding to a central visual field and an effective visual field, and the second region is a region corresponding to a peripheral visual field and a region outside of the peripheral visual field.

3. The vehicle display device according to claim 1 or 2, **characterized in that**
the display processing unit (140) is configured to emphasize the second virtual image in the second region, as a display position of the second virtual image gets away from the first region.

4. The vehicle display device according to any one of claims 1 to 3, **characterized in that**
the region calculation unit (111) is configured to calculate to narrow the first region according to at least one of an increase in speed of the vehicle (1) and an increase in driving load of the driver.

5. The vehicle display device according to any one of claims 1 to 4, **characterized in that**
the display processing unit (140) is configured to emphasize the second virtual image by expanding a display region of the second virtual image.

6. The vehicle display device according to any one of claims 1 to 5, **characterized in that**
the display processing unit (140) is configured to emphasize the second virtual image by periodically increasing and decreasing a size of a display region of the second virtual image.

7. The vehicle display device according to any one of claims 1 to 6, **characterized in that**
the region calculation unit (111) is configured to calculate the first region, the first region being calculated in a plane facing the driver, the first region including a point of view of the driver, and the first region being calculated in upward, downward, left, and right directions from the point of view of the driver.

8. The vehicle display device according to any one of claims 1 to 6, **characterized in that**
the region calculation unit (111) is configured to calculate the first region, the first region being calculated in a plane facing the driver, the first region including a point of view of the driver, the first region being calculated in upward, downward, left, and right directions from the point of view of the driver, and in front and rear directions perpendicular to the plane facing the driver.

9. The vehicle display device according to any one of claims 1 to 8, **characterized in that**
when the display object detection unit (113) detects, as the object, a sign indicating an information on a region located in a travel path of the vehicle (1), the display processing unit (140) is configured to display the second virtual image in a range including both the first region and the second region, when the display processing unit (140) displays a virtual image in the second region, the second virtual image corresponding to the sign.

10. The vehicle display device according to any one of claims 1 to 8, **characterized in that**
when the display object detection unit (113) detects, as the object, a sign indicating an information on a region located in a travel path of the vehicle (1), the display processing unit (140) is configured to display the first virtual image, the first virtual image corresponding to the sign, in the first region.

11. The vehicle display device according to claim 2, **characterized by** further comprising:
an eyeball position sensor (16) configured to detect a position of an eyeball of the driver and a direction of the eyeball of the driver, wherein
the region calculation unit (111) is configured to calculate the central visual field, the effective visual field, and the peripheral visual field based on the position of an eyeball of the driver and the direction of the eyeball of the driver.

12. The vehicle display device according to claim 11, **characterized in that**
the display processing unit (140) is configured to display the first virtual image and the second virtual image so as to be superimposed on the object as seen from the position of the eyeball of the driver detected by the eyeball position sensor (16).

13. The vehicle display device according to claim 1, **characterized in that**
the display processing unit (140) is configured to display the first virtual image on the display (7), the first virtual image allowing the driver to recognize of an attribute of the object.

14. The vehicle display device according to claim 13, **characterized in that**
the first virtual image includes more character information or more symbol information compared to the second virtual image, the character information or the symbol information allowing the driver to recognize of the attribute of the object.

15. The vehicle display device according to any one of claims 1 to 14, **characterized in that**
the second display mode includes a blinking display mode or a display mode having a higher brightness than the first display mode.
